(19) Europäisches Patentamt
European Patent Office
Office européen des brevets

(11) EP 3 424 167 B1

# (12) EUROPEAN PATENT SPECIFICATION

(45) Date of publication and mention of the grant of the patent:
**12.01.2022 Bulletin 2022/02**

(21) Application number: **16791467.0**

(22) Date of filing: **26.09.2016**

(51) Int Cl.:
***H04L 1/06*** *(2006.01)*

(86) International application number:
**PCT/TR2016/050353**

(87) International publication number:
**WO 2018/056917 (29.03.2018 Gazette 2018/13)**

## (54) SPACE-TIME CHANNEL MODULATION METHOD

RAUM-ZEIT-KANAL-MODULATIONSVERFAHREN

PROCÉDÉ DE MODULATION DE CANAL SPATIO-TEMPOREL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.01.2019 Bulletin 2019/02**

(73) Proprietor: **Istanbul Teknik Universitesi**
**34469 Istanbul (TR)**

(72) Inventors:
- **BASAR, Ertugrul**
  **34469 Sariyer/Istanbul (TR)**
- **ALTUNBAS, Ibrahim**
  **34469 Sariyer/Istanbul (TR)**

(74) Representative: **Berkkam, Ayfer**
**Berkkam Patent Consulting**
**Büklüm Sokak, No. 5/16-3**
**06680 Kavaklidere Ankara (TR)**

(56) References cited:
- **LI XIAOFENG ET AL: "High Rate Space-Time Block Coded Spatial Modulation with Cyclic Structure", IEEE COMMUNICATIONS LETTERS, IEEE SERVICE CENTER, PISCATAWAY, NJ, US, vol. 18, no. 4, 1 April 2014 (2014-04-01), pages 532-535, XP011545416, ISSN: 1089-7798, DOI: 10.1109/LCOMM.2014.012714.132544 [retrieved on 2014-04-15]**
- **ERTUGRUL BASAR ET AL: "Space-Time Block Coded Spatial Modulation", IEEE TRANSACTIONS ON COMMUNICATIONS, IEEE SERVICE CENTER, PISCATAWAY, NJ. USA, vol. 59, no. 3, 1 March 2011 (2011-03-01), pages 823-832, XP011363429, ISSN: 0090-6778, DOI: 10.1109/TCOMM.2011.121410.100149**
- **NARESH Y ET AL: "On media-based modulation using RF mirrors", 2016 INFORMATION THEORY AND APPLICATIONS WORKSHOP (ITA), IEEE, 31 January 2016 (2016-01-31), pages 1-10, XP033082436, DOI: 10.1109/ITA.2016.7888189 [retrieved on 2017-03-27]**

EP 3 424 167 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The invention is related with space-time channel modulation method, which extends the classical space-time block codes into a new third dimension: channel states (transmission media) dimension.

The invention is particularly related with space-time channel modulation method, which extends the classical space-time block codes into a new third dimension with the mapping of additional information bits to the indices of the available channel's states obtained by the employment of RF mirrors.

### Prior Art

Nowadays, index modulation techniques have attracted significant attention due to their advantages such as improved spectral efficiency and error performance over classical digital modulation schemes. When it comes to an index modulation scheme, additional information bits can be transmitted by means of the indices of the building blocks of the target communications systems. Two well-known applications of the index modulation concept are space shift keying/spatial modulation and orthogonal frequency division multiplexing with index modulation schemes, in which the indices of the available transmit antennas and orthogonal frequency division multiplexing subcarriers are considered for the transmission of additional information bits, respectively.

Media based modulation (MBM) is an index modulation scheme in which the concept of reconfigurable antennas are used in a clever fashion for the transmission of additional information bits. In an MBM scheme, the characteristics of transmit antennas, which can be equipped with radio frequency (RF) mirrors, are changed according to the information bits unlike the conventional reconfigurable antenna schemes. It means that MBM considers a finite number of channel states and the information is embedded into the determination of the active channel state. In this context, MBM performs the modulation of the wireless channel itself; therefore, can be considered as channel modulation.

The concept of MBM is introduced with the aim of embedding information to the variations of channel states (transmission media). It has been shown that significant gains can be obtained by MBM over classical single-input multiple-output systems (SIMO) and MBM can be practically realized using RF mirrors. MBM is adapted to multiple-input multiple-output (MIMO) transmission to obtain a more flexible system design with reduced complexity implementation. MBM principles are combined to improve the error performance of space shift keying considering correlated and nonidentically distributed Rician fading channels. More recently, MBM and generalized spatial modulation techniques are combined to improve the error performance of MIMO-MBM and an Euclidean distance-based RF mirror activation pattern selection procedure is proposed.

There are some developments present in the known state of the art, that have been shown to provide improvements in error performance with configuring antennas and modulating channel states in multiple-input multi-output transmission systems. In paper "LI XIAOFENG ET AL: "High Rate Space-Time Block Coded Spatial Modulation with Cyclic Structure",IEEE COMMUNICATIONS LETTERS, IEEE SERViCE CENTER, PISCATAWAY, NJ, US,vol. 18, no. 4, 1 April 2014 (2014-04-01), pages 532-535, XP011545416", A high rate space-time block coded spatial modulation scheme with cyclic structure (STBC-CSM) is disclosed.

In paper "ERTUGRUL BASAR ET AL: "Space-Time Block Coded Spatial Modulation",IEEE TRANSACTIONS ON COMMUNICATIONS, IEEE SERViCE CENTER, PISCATAWAY, NJ. USA,vol. 59, no. 3, 1 March 2011 (2011-03-01), pages 823-832, XP011363429", A multiple-input multiple-output (MIMO) transmission scheme, called space-time block coded spatial modulation (STBC-SM), is proposed. In paper "NARESH Y ET AL: "On media-based modulation using RF mirrors", 2016 INFORMATION THEORY AND APPLICATIONS WORKSHOP (ITA), IEEE, 31 January 2016 (2016-01-31), pages 1-10, XP033082436", Media-based Modulation using RF mirrors is disclosed.

For example, in the US2010272204A1 patent document which can be given as an example to these developments, one or more antennas of a communication device are reconfigured in different radiation states and a space-time state block coded MIMO system has been described. This invention comprises a space-time state block code which can be adapted to a MIMO system with using reconfigurable antennas.

In the American Patent document numbered US2013301747A1 within the known state of the art, a wireless transmission system has been described. A method which is shown to benefit from full-duplex capability to simplify practical implementation of network management, improve network performance, network structures and include a traditional network structure, as well as some basic information theoretic setups, such as space division multiple access (SDMA) in down-link and in the uplink MIMO system cooperative signalling towards reducing multi-user interference, and interference channel is described in this invention.

In the American Patent document numbered US9160436B1 within the known state of the art, a transmission technique has been described. A technique which decodes the received symbols, where multiple copies of the same transmitted symbols are received over channels with varying characteristics, is described in this invention. As it can be understood from the similar mentioned documents above, different wireless communication methods are being used in order to transmit by modulating the channel states in MIMO systems. The "space-time channel modulation" that has been described in this document provides a method that is different from the ones in the known state of the art and from the above mentioned documents. Space-time channel modulation method generalizes the space-time block codes into a new third dimension which is channel states or transmission media dimension.

## Brief Description of the Invention and its Aims

The aim of this invention is to provide a method for space-time channel modulation which extends the classical space-time block codes into a new third dimension: channel states (transmission media) dimension to achieve interesting trade-offs among decoding complexity, error performance and data rate.

The space-time channel modulation, which is provided in order to reach the aims of the invention, comprises the concept of channel modulation, by exploiting not only the space and time domains to achieve transmit diversity but also the channel states domain to convey additional information bits.

In the proposed space-time channel modulation scheme, the incoming information bits determine the wireless channel states to be used as well as the two complex data symbols to be transmitted using space-time block coding from two transmit antennas in two time slots. Three space-time channel modulation schemes, which achieve interesting trade-offs among decoding complexity, error performance and data rate, are proposed and the reduced complexity maximum likelihood detector of the space-time channel modulation scheme is formulated.

## Detailed Description of the Invention

The space-time channel modulation system that is provided in order to reach the aims of the invention has been illustrated in the attached figures. According to the figures;

**Figure-1** is the schematic view of the transmitter structure which is used for space-time channel modulation system.

**Figure-2** is the schematic view of the receiver structure which is used for space-time channel modulation system.

The parts in the figures have been numbered as follows:

1. Space-Time Block Encoder
2. Channel State Configurator
3. Maximum-Likelihood Detector
4. Reconfigurable Transmit Antenna
5. Receive Antenna
6. Amplitude and/or Phase Information Bits
7. Channel Information Bits
8. Maximum Likelihood Minimum Metric Calculator
9. Minimum Metric Selector
10. Demapper
11. Received Signal
12. Decision Metric
13. Detected Symbols and Channel States

Space-time channel modulation (STCM) is introduced by extending the classical space-time codes into a channel states (media) dimension. As the core space-time block code, considered method, which is the Alamouti's space-time block code, given by

$$\mathbf{S} = \begin{bmatrix} x_1 & -x_2^* \\ x_2 & x_1^* \end{bmatrix}$$

where the rows and columns respectively stand for reconfigurable transmit antennas (4) and time slots. The classical Alamouti's space-time block code can transmit two complex symbols through a space-time block encoder (1), i.e., $2\log_2$ *(Q)* bits, in two time slots for which a spectral efficiency of $\eta = \log_2 (Q)$ bits per channel use (bpcu) will be obtained. By extending **S** into channel states, primary purpose is to improve the data rate while ensuring transmit diversity and/or simplified maximum-likelihood detection which can be realized by maximum-likelihood detector (3).

In space-time channel modulation, channel information bits (7) are transmitted by changing the channel state for each reconfigurable transmit antenna (4) in each time slot. If the specific space-time block code (**S**) is transmitted in two time slots using two reconfigurable transmit antennas (4), where the channel state is determined for each reconfigurable transmit antenna (4) using $M$ RF mirrors at each of them. As an example, combining media-based modulation principle with space-time block coding, S can be transmitted by selecting channel states through channel state configurator (2), where states $k$ and $l$ can be selected for the first and second reconfigurable transmit antennas (4), respectively, where $k,l \in \{1,2,....,2^M\}$. Assuming that the same channel states are selected in the second time slot, a total of $2M + 2\log_2(Q)$ bits can be transmitted by this space-time channel modulation scheme in two time slots, which leads to an average of $\eta = M + \log_2(Q)$ bpcu transmission.

The baseband transmission model for the classical space-time block code can be given as **Y** = **HS** + **N**, where $\mathbf{Y} \in C^{Rx2}$ is the matrix of received signals (11) in two time slots, $\mathbf{H} \in C^{Rx2}$ is the matrix of multiple-input multiple-output channel fading coefficients and $\mathbf{N} \in C^{Rx2}$ is the matrix of noise samples, where C stands for the ring of complex numbers. For the space-time channel modulation scheme, the extension of **S** into channel states can be represented by the following signal model: **Y = CZ** +**N** where **Y** and **N** are the same as defined earlier, while $\mathbf{C} = [\mathbf{h}_1 \ldots \mathbf{h}_{2^M}\, \mathbf{h}_{2^M+1} \ldots \mathbf{h}_{2(M+1)}] \in C^{Rx2(M+1)}$ is the extended space-time channel modulation channel matrix which considers all possible channel state realizations for both reconfigurable transmit antennas (4), where $\mathbf{h}_k \in C^{Rx1}$ and $\mathbf{h}_{2^M+l} \in C^{Rx1}$ for $k,l \in \{1,2, .... ,2^M\}$ denote the vector of channel coefficients between the receive antennas (5) and the first and second reconfigurable transmit antennas (4) for channel states $k$ and $l$, respectively. As it is assumed, the elements of **C** and **N** follow CN(0,1) and CN(0,$N_0$) distributions, respectively, where CN(0,$s$) stands for complex normal distribution with variance s. On the other hand, $\mathbf{Z} \in C^{2(M+1)\times 2}$ is the extended version of S, which has the following general form:

$$\mathbf{Z} = \begin{bmatrix} 0 & \cdots & \overset{\downarrow k}{x_1} & \cdots & & 0 & | & 0 & \cdots & \overset{\downarrow 2^M+l}{x_2} & \cdots & & 0 \\ 0 & \cdots & & \underset{\uparrow m}{-x_2^*} & \cdots & 0 & | & 0 & \cdots & & \underset{\uparrow 2^M+n}{x_1^*} & \cdots & 0 \end{bmatrix}^T$$

where it is assumed that in the first time slot, channel states $k$ and $l$ are selected by channel state configurator (2) for the transmission of $x_1$ and $x_2$ from the first and second reconfigurable transmit antennas (4), respectively. On the other hand, in the second time slot, channel states $m$ and $n$ are selected by channel state configurator (2) for the transmission of $-x_2^*$ and $x_1^*$ from the first and second reconfigurable transmit antennas (4), respectively. As seen from the matrix **Z**, the space-time channel modulation scheme can be considered as a dynamic space-time block code, similar to the space-time block coded spatial-modulation (STBC-SM) scheme in which the transmission matrices are obtained by extending **S** into antenna (spatial) domain. On the other hand, space-time block coded spatial-modulation scheme requires more than two reconfigurable transmit antennas (4) to map additional information bits, while the space-time channel modulation scheme can benefit from RF mirrors and can transmit additional number of bits by using only two reconfigurable transmit antennas (4). Considering the generic form of matrix **Z**, three different space-time channel modulation schemes, which provide interesting trade-offs among decoding complexity, data rate and error performance are proposed.

For the transmission of two complex symbols ($x_1$ and $x_2$) and their conjugates ( $-x_2^*$ and $x_1^*$ ), three novel space-time channel modulation schemes are proposed which have the following parameters:

$$\text{Scheme 1: } m = k,\ n = l;\ \eta = 0.5M + \log_2(Q) \text{ bpcu}$$

$$\text{Scheme 2: } k = l = m = n;\ \eta = 0.5M + \log_2(Q) \text{ bpcu}$$

$$\text{Scheme 3: } m = l;\ n = k;\ \eta = M + \log_2(Q) \text{ bpcu.}$$

Scheme 1 is the generic space-time channel modulation scheme in which channel states $k$ and $l$ are selected for the first and second reconfigurable transmit antennas (4) in the first and second time slot. For scheme 2, the same channel state (k) is selected for both reconfigurable transmit antennas (4) and both time slots, while for scheme 3, in the first time slot, channel states $k$ and $l$ are selected for the first and second reconfigurable transmit antennas (4), respectively; however, for the second time slot, channel states $l$ and $k$ are selected for the first and second reconfigurable transmit antennas (4), respectively.

To perform reduced complexity Maximum-Likelihood detection, for a given quadruplet ($k$, $l$, $m$, $n$), the following equivalent signal model can be obtained from represented signal model which is extension of **S**: $\mathbf{y}_{eq} = \mathbf{C}_{eq}\mathbf{z}_{eq} + \mathbf{n}_{eq}$, where

$$\mathbf{y}_{eq} = \left[y_{1,1} \dots y_{2,1}^{*}\ y_{1,2}\ \ y_{2,2}^{*} \dots .\ y_{1,R}\ \ y_{2,R}^{*}\right]^{T} \in \mathbb{C}^{2Rx1}$$

is the equivalent received signals vector and $y_{p,r}$ is the received signal (11) at receive antenna (5) $r$ at time slot $p$, $\mathbf{z}_{eq} = [x_1\ x_2\ ]^T$ and $\mathbf{n}_{eq} \in \mathbb{C}^{2Rx1}$ represent equivalent data symbols and noise vectors, respectively. $\mathbf{C}_{eq} \in \mathbb{C}^{2Rx2}$ is the equivalent space-time channel modulation channel matrix, which has the following general form:

$$\mathbf{C}_{eq} = [\mathbf{c}_1\ \mathbf{c}_2\ ] = \begin{bmatrix} h_{k,1} & h_{2^M+n,1}^{*} & \dots & h_{k,R} & h_{2^M+n,R}^{*} \\ h_{2^M+l,1} & -h_{m,1}^{*} & \dots & h_{2^M+l,R} & -h_{m,R}^{*} \end{bmatrix}^{T}$$

where $h_{k,r}$ and $h_{m,r}$ denote the channel fading coefficient between the first reconfigurable transmit antenna (4) and $r$ th receive antenna (5) for channel states $k$ and $m$, respectively while $h_{2^M+1,r}$ and $h_{2^M+n,r}$ denote the channel fading coefficient between the second reconfigurable transmit antenna (4) and $r$th receive antenna (5) for channel states $l$ and $n$, respectively and $\mathbf{h}_i = [h_{i,1}\ h_{i,1} \dots h_{i,R}]^T$ for $i = 1, 2, \dots, 2^{(M+1)}$. Brute-force maximum-likelihood detection which is performed by maximum likelihood minimum metric calculator (8), can be performed for schemes 1 or 3 and scheme 2 respectively by

$$\left(\hat{k}, \hat{l}, \widehat{x_1}, \widehat{x_2}\right) = \arg\min_{k,l,x_1,x_2} \left\|\mathbf{y}_{eq} - \mathbf{C}_{eq}\mathbf{z}_{eq}\right\|^2$$

$$\left(\hat{k}, \widehat{x_1}, \widehat{x_2}\right) = \mathrm{argmin}_{k,x_1,x_2} \left\|\mathbf{y}_{eq} - \mathbf{C}_{eq}\mathbf{z}_{eq}\right\|^2$$

which require $2^{2M}Q^2$ and $2^MQ^2$ metric calculations, respectively. However, as seen from the general form of equivalent space-time channel modulation channel matrix, for schemes 1 and 2, the clever selection of the active channel states ensures that $\mathbf{c}_1^H\mathbf{c}_2 = 0$ for all possible realizations of $\mathbf{C}_{eq}$, which allows the independent detection of $x_1$ and $x_2$. Ultimately, the reduced complexity conditional maximum-likelihood detection of scheme 1 has been presented within the framework of space-time channel modulation, while the same procedures can be followed for scheme 2 by considering $k$=$l$.

For scheme 1, considering a given pair of ($k$,$l$), the minimum maximum-likelihood decision metrics (12) can be obtained by minimum metric selector (9) inside the conditional space-time channel modulation maximum-likelihood detector (3) for $x_1$ and $x_2$, respectively as

$$m_1^{(k,l)} = \min_{x_1} \left\|\mathbf{y}_{eq} - \mathbf{c}_1 x_1\right\|^2$$

$$m_2^{(k,l)} = \min_{x_2} \left\|\mathbf{y}_{eq} - \mathbf{c}_2 x_2\right\|^2$$

and the corresponding conditional maximum-likelihood estimates of $x_1$ and $x_2$ are obtained as follows:

$$x_1^{(k,l)} = \arg\min_{x_1} \left\|\mathbf{y}_{eq} - \mathbf{c}_1 x_1\right\|^2$$

$$x_2^{(k,l)} = \arg\min_{x_2} \left\|\mathbf{y}_{eq} - \mathbf{c}_2 x_2\right\|^2$$

Afterwards, the minimum maximum-likelihood decision metrics (12) which are received by minimum metric selector (9), for a given pair of (*k*,*l*) is obtained as $d^{(k,l)} = m_1^{(k,l)} + m_2^{(k,l)}$. After the calculation of $d^{(k,l)}$ for all possible pairs of (*k*,*l*), the conditional maximum-likelihood detector (3) determines the most likely combination which forms detected symbols and channel states (13) by $(\hat{k},\hat{l}) = \arg\min_{(k,l)} d^{(k,l)}$ and the corresponding data symbols from $(\hat{x}_1,\hat{x}_2) = (x_1^{(\hat{k},\hat{l})}, x_2^{(\hat{k},\hat{l})})$.

The detection of the input bits can be performed by bit demapping operation by demapper (10). Therefore, using conditional maximum-likelihood detection, the total number of required metric calculations are reduced from $2^{2M}Q^2$ to $2^{2M}2Q$ for scheme 1. Similarly for scheme 2, the total number of required metric calculations can be reduced from $2^M Q^2$ to $2^M 2Q$. On the other hand, since scheme 3 does not satisfy the orthogonality of $\mathbf{C}_{eq}$, its maximum-likelihood detection complexity remains at $2^{2M}Q^2$.

## Claims

1. A space-time channel modulation method comprising the steps:

   - mapping incoming amplitude and/or phase information bits (6) to two complex data symbols and employment of MIMO transmission with two reconfigurable transmit antennas (4) and two time slots by an Alamouti space-time block encoder (1),
   - mapping incoming channel information bits (7) to channel states according to a number of available RF mirrors at the reconfigurable transmit antennas (4) wherein channel states are selected through a channel state configurator (2),
   - processing of received signals (11) by the conditional maximum likelihood detector (3) to perform reduced complexity detection of the transmitted complex data symbols and channel states (13).
   - demapping of the detected complex data symbols and channel states by a demapper (10) to obtain amplitude and/or phase information (6) and channel information bits (7) at the receiver, wherein, the
   - channel information bits (7) are transmitted by changing the channel state for each reconfigurable transmit antenna (4) in each time slot, wherein the channel state is determined for each reconfigurable transmit antenna (4) by using the RF mirrors at each of the transmit antenna (4).

2. The space-time channel modulation method according to claim 1, wherein, in the said method any one of the below operation modes are chosen,

   - selecting two different channel states with the incoming channel information bits (7) for the first and second reconfigurable transmit antennas (4), and transmitting the amplitude and/or phase information bits (6) using the space-time block encoder (1) from two reconfigurable transmit antennas (4) in two time slots, by using the same channel states for first time slot and the second time slot,
   - selecting only one channel state with incoming channel information bits (7) for both reconfigurable transmit antennas (4), and transmitting the amplitude and/or phase information bits (6) using the space-time block encoder (1) from the two reconfigurable transmit

     antennas (4) in two time slots, by using the same channel state for first time slot and the second time slot, selecting two different channel states with incoming channel information bits (7) for the first and second transmit antennas and transmitting the amplitude and/or phase information bits (6) using the space-time block encoder (1) from the two reconfigurable transmit
     antennas (4) in two time slots; however, by interchanging the selected channel states of the first and second transmit antennas in the second time slot compared to the first time slot.

## Patentansprüche

1. Verfahren zur Modulation eines Raum-Zeit-Kanals, umfassend die Schritte:

   - Abbilden der ankommenden Amplituden- und/oder Phaseninformationsbits (6) auf zwei komplexe Datensymbole und Verwendung von MIMO-Übertragung mit zwei rekonfigurierbaren Sendeantennen (4) und zwei Zeitschlitzen durch einen Alamouti-Raum-Zeit-Blockkodierer (1),

- Abbilden der ankommenden Kanalinformationsbits (7) auf Kanalzustände gemäß einer Anzahl verfügbarer RF-Spiegel an den rekonfigurierbaren Sendeantennen (4), wobei Kanalzustände durch einen Kanalzustandskonfigurator (2) ausgewählt werden,
- Verarbeiten der empfangenen Signale (11) durch den bedingten Maximum-Likelihood-Detektor (3), um eine Detektion mit reduzierter Komplexität der übertragenen komplexen Datensymbole und Kanalzustände (13) durchzuführen,
- Demappen der erkannten komplexen Datensymbole und Kanalzustände durch einen Demapper (10), um Amplituden- und/oder Phaseninformationen (6) und Kanalinformationsbits (7) am Empfänger zu erhalten,

wobei die Kanalinformationsbits (7) durch Ändern des Kanalzustands für jede rekonfigurierbare Sendeantenne (4) in jedem Zeitschlitz übertragen werden, wobei der Kanalzustand für jede rekonfigurierbare Sendeantenne (4) unter Verwendung der RF-Spiegel an jeder der Sendeantennen (4) bestimmt wird.

**2.** Verfahren zur Modulation eines Raum-Zeit-Kanals nach Anspruch 1, wobei in dem Verfahren einer der folgenden Betriebsweise ausgewählt wird,

- Auswählen der zwei verschiedenen Kanalzuständen mit den ankommenden Kanalinformationsbits (7) für die erste und zweite rekonfigurierbare Sendeantenne (4) und Übertragen der Amplituden- und/oder Phaseninformationsbits (6) unter Verwendung des Raum-Zeit-Blockkodierers (1) von zwei rekonfigurierbaren Sendeantennen (4) in zwei Zeitschlitzen, indem die gleiche Kanalzustände für den ersten Zeitschlitz und den zweiten Zeitschlitz verwendet werden,
- Auswählen des nur einen Kanalzustandes mit eingehenden Kanalinformationsbits (7) für beide rekonfigurierbaren Sendeantennen (4) und Übertragen der Amplituden- und/oder Phaseninformationsbits (6) unter Verwendung des Raum-Zeit-Blockkodierers (1) von zwei rekonfigurierbaren Sendeantennen (4) in zwei Zeitschlitzen, indem der gleiche Kanalzustand für den ersten Zeitschlitz und den zweiten Zeitschlitz verwendet wird,

Auswählen der zwei verschiedenen Kanalzuständen mit ankommenden Kanalinformationsbits (7) für die erste und zweite Sendeantenne und Übertragen der Amplituden- und/oder Phaseninformationsbits (6) unter Verwendung des Raum-Zeit-Blockkodierers (1) von zwei rekonfigurierbaren Sendeantennen (4) in zwei Zeitschlitzen; jedoch indem die ausgewählten Kanalzustände der ersten und zweiten Sendeantenne in dem zweiten Zeitschlitz im Vergleich zu dem ersten Zeitschlitz vertauscht werden.

## Revendications

**1.** Procédé de modulation de canal spatio-temporel comprenant les étapes suivantes:

- mapper les bits d'information d'amplitude et/ou de phase entrants (6) en deux symboles de données complexes et emploi de la transmission MIMO avec deux antennes d'émission reconfigurables (4) et deux créneaux temporels par un codeur de bloc spatio-temporel Alamouti (1),
- mapper les bits d'informations de canal entrants (7) à des états de canal selon un nombre de miroirs RF disponibles aux antennes d'émission reconfigurables (4), dans lequel les états de canal sont sélectionnés par un configurateur d'état de canal (2),
- traiter les signaux reçus (11) par le détecteur de vraisemblance maximale conditionnelle (3) pour effectuer une détection à complexité réduite des symboles de données complexes et des états de canal transmis (13),
- démapper les symboles de données complexes et des états de canal détectés par un démappeur (10) pour obtenir des informations d'amplitude et/ou de phase (6) et des bits d'informations de canal (7) au récepteur,

dans lequel, les bits d'information de canal (7) sont transmis en changeant l'état de canal pour chaque antenne d'émission reconfigurable (4) dans chaque créneau temporel, dans lequel l'état du canal est déterminé pour chaque antenne d'émission reconfigurable (4) en utilisant les miroirs RF à chacune des antennes d'émission (4).

**2.** Procédé de modulation de canal spatio-temporel selon la revendication 1, dans lequel, dans ledit procédé, l'un quelconque des modes de fonctionnement ci-dessous est choisi,

- sélectionner deux états de canal différents avec les bits d'information de canal entrants (7) pour les première et deuxième antennes d'émission reconfigurables (4), et transmettre les bits d'information d'amplitude et/ou de phase (6) en utilisant le codeur de bloc spatio-temporel (1) à partir de deux antennes d'émission reconfigurables (4) dans deux créneaux temporels, en utilisant les mêmes états de canal pour le premier créneau temporel et le deuxième créneau temporel,
- sélectionner un seul état de canal avec des bits d'information de canal entrants (7) pour les deux antennes d'émission reconfigurables (4), et transmettre les bits d'information d'amplitude et/ou de phase (6) en utilisant le codeur de bloc spatio-temporel (1) à partir de deux antennes d'émission reconfigurables (4) dans deux créneaux temporels, en utilisant les mêmes états de canal pour le premier créneau temporel et le deuxième créneau temporel,

sélectionner deux états de canal différents avec les bits d'information de canal entrants (7) pour les première et deuxième antennes d'émission et transmettre les bits d'information d'amplitude et/ou de phase (6) en utilisant le codeur de bloc spatio-temporel (1) à partir de deux antennes d'émission reconfigurables (4) dans deux créneaux temporels; cependant, en interchangeant les états de canal sélectionnés des première et deuxième antennes d'émission dans le deuxième créneau temporel par rapport au premier créneau temporel.

Figure 1

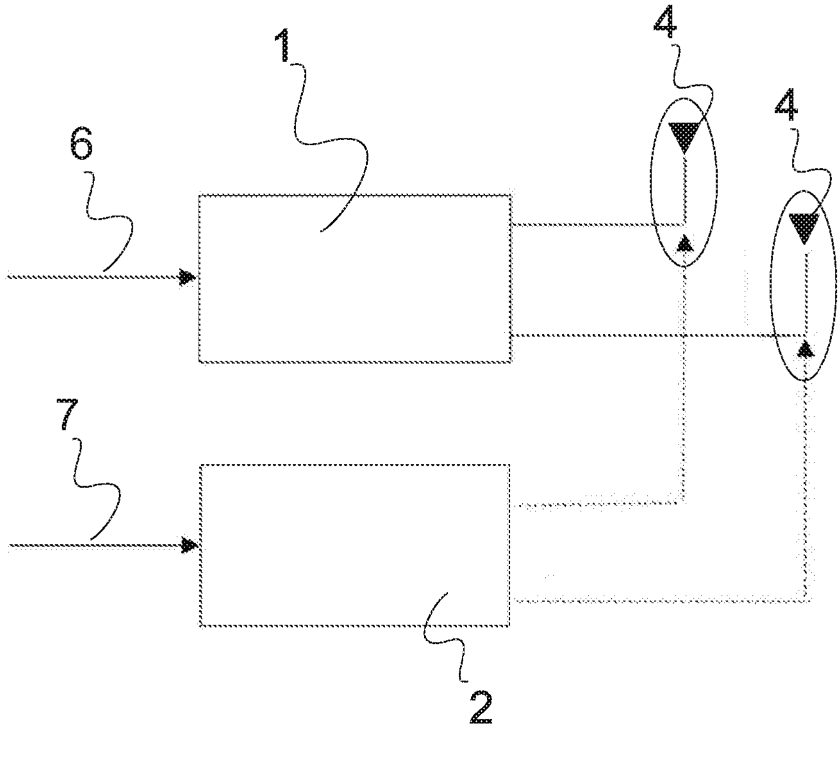

Figure 2

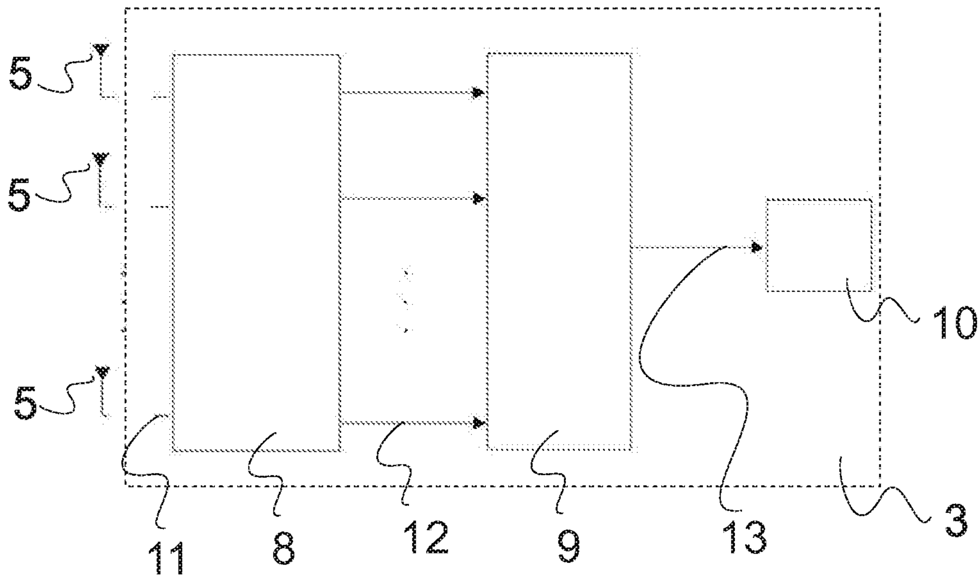

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2010272204 A1
- US 2013301747 A1
- US 9160436 B1


### Non-patent literature cited in the description


- High Rate Space-Time Block Coded Spatial Modulation with Cyclic Structure. **LI XIAOFENG et al.** IEEE COMMUNICATIONS LETTERS. IEEE SERViCE CENTER, 01 April 2014, vol. 18, 532-535
- Space-Time Block Coded Spatial Modulation. **ERTUGRUL BASAR et al.** IEEE TRANSACTIONS ON COMMUNICATIONS. IEEE, 01 March 2011, vol. 59, 823-832
- On media-based modulation using RF mirrors. **NARESH Y et al.** INFORMATION THEORY AND APPLICATIONS WORKSHOP (ITA). IEEE, 31 January 2016, 1-10